# EUROPÄISCHE PATENTSCHRIFT

(11) **EP 0 918 825 B1**
(45) Veröffentlichungstag und Bekanntmachung des Hinweises auf die Patenterteilung: **28.11.2001**
(21) Anmeldenummer: 97932695.6
(22) Anmeldetag: 05.08.1997
(51) Int. Cl.: C08L 97/00, C08L 97/02, C08L 89/00

(54) **BIOLOGISCH ABBAUBARE ZUSAMMENSETZUNG**
BIODEGRADABLE COMPOSITION
COMPOSITION BIODEGRADABLE

(30) Priorität: 12.08.1996 CH 196796; 31.10.1996 CH 268796; 09.12.1996 CH 301596; 06.01.1997 CH 1397
(43) Veröffentlichungstag der Anmeldung: 02.06.1999
(73) Patentinhaber: NOVAMONT S.p.A., 28100 Novara (IT)
(72) Erfinder: Silbiger, Jakob, 4054 Basel (CH)
(74) Vertreter: Braun, André
(86) Internationale Anmeldenummer: CH9700292
(87) Internationale Veröffentlichungsnummer: WO9806785

(56) Entgegenhaltungen:
- WO-A-95/08594
- WO-A-96/14361
- DE-A- 4 331 747
- US-A- 2 355 180
- US-A- 5 389 322

## Beschreibung

Die vorliegende Erfindung betrifft eine biologisch abbaubare Zusammensetzung, welche mindestens ein Lignin und/oder ein Lignin enthaltendes Material sowie ein Protein enthält und welche für die Herstellung von biologisch abbaubaren Gegenständen, wie beispielsweise Verbrauchsartikel, wie Reklameartikel, Etiketten, Becher, Blumentöpfe, Fadenspulen, Kerzenbecher und dergleichen sowie auch für die Herstellung von Folien oder geschäumten Materialien, geeignet ist. Ebenso betrifft die Erfindung Artikel, welche aus der erfindungsgemässen Zusammensetzung hergestellt sind.

Lignin ist ein in der Natur nachwachsender, weit verbreiteter biologisch abbaubarer Rohnstoff. Lignin ist ein Zellwandmaterial von Holz, von Stroh und ähnlichen Materialien und fällt bei deren Verarbeitung, insbesondere bei der Herstellung von Holzcellulose, des Rohproduktes für die Papierindustrie, als Nebenprodukt an. Auf Grund der zur Abtrennung des Lignins verwendeten Verfahren und den damit erhaltenen an sich bekannten Ligninprodukten unterscheidet man hauptsächlich zwischen sog. Sulfat-Lignin oder Kraft-Lignin, Sulfonat-Lignin, Organosolv-Lignin, welches durch Extraktion mit organischen Lösungsmitteln, wie Äthanol oder n-Butanol erhalten wird, mit Dampfdruck behandeltes Lignin und mit Säure hydrolysiertes Lignin. Die Verfahren zur Gewinnung der genannten Lignine sowie die damit erhaltenen Lignine sind in der Literatur ausführlich beschrieben worden. Alle diese Lignine sind für die Herstellung der im weiteren definierten Zusammensetzungen verwendbar.

Für die erfindungsgemässe Verwendung muss als Lignin-Komponente nicht notwendigerweise isoliertes und vergleichsweise reines Lignin verwendet werden. Lignin enthaltendes Material kann direkt eingesetzt werden. So ist es ohne weiteres möglich, Holz oder anderes Lignin enthaltendes Material direkt, als natürlich nachwachsenden Rohstoff, anstelle des isolierten Lignins erfindungsgemäss zu verwenden. In Sägereien, fällt Holz beispielsweise in Form von Sägemehl oder als Holzspäne an. Oft werden abgeschnittene Äste, Zweige oder Sträucher maschinell zu Häckselgut bzw. Schreddergut zerkleinert. Diese Materialien können direkt weiter zu biologisch abbaubaren geformten Gegenständen verarbeitet werden. In diesem Sinne betrifft die vorliegende Erfindung auch die Verarbeitung von Lignin enthaltenden Materialien, vorzugsweise in kleinteiliger bis feinteiliger Form, vorzugsweise kleinteiliges bis feinteiliges Holz oder Stroh, vorzugsweise Holz, gegebenenfalls zusammen mit separat hergestelltem, relativ reinem, Lignin, zu geformten Gegenständen, welche formstabil sind, jedoch in der Natur biologisch abgebaut werden. Proteine, Lignine und Lignin enthaltende Stoffe sind miteinander gut benetzbar und gehen miteinander gemäss der vorliegenden Erfindung sehr gute physikalische oder chemische Bindungen ein, was wiederum zu guten Produkten führt, die leicht und reproduzierbar hergestellt werden können.

Artikel auf der Basis von biologisch abbaubaren Werkstoffen sind an sich bekannt, beispielsweise aus US-A-2 355 180. Im Vergleich zu bekannten Materialien ist die erfindungsgemässe biologisch abbaubare Zusammensetzung billig und in der Praxis einfach herstellbar, beispielsweise im Schmelzverfahren mittels Pressformen, mittels Extrusion oder im Spritzguss. Dies hängt von der ausgewählten Zusammensetzung ab. Dabei werden Produkte mit sehr guten anwendungstechnischen Eigenschaften erhalten, welche eine hohe Stabilität gegen Feuchtigkeit aufweisen, so dass deren physikalische Eigenschaften innerhalb eines weiten Feuchtigkeitsbereichs der atmosphärischen Umgebung stabil bleiben. Daraus hergestellte Artikel zeigen eine natürliche Farbe und je nach der gewählten Zusammensetzung z.B. auch die natürliche Farbe des Holzes, was den hergestellten Artikeln eine besondere Attraktivität verleiht. Erfindungsgemässe Zusammensetzungen, welche Lignin, ein Protein und gegebenenfalls ein Flammschutzmittel enthalten, zeigen ausgezeichnete selbstverlöschende Eigenschaften. Insgesamt ergibt sich ein überraschend gutes Preis/Leistungsverhältnis, was für die erfolgreiche kommerzielle und technische Anwendung von ausschlaggebender Bedeutung ist.

Die vorliegende Erfindung ist in den Patentansprüchen definiert. Insbesondere betrifft die Erfindung eine biologisch abbaubare Zusammensetzung, welche dadurch gekennzeichnet ist, dass diese durch Erhitzen und Verschmelzen von mindestens einem Lignin und/oder einem Lignin enthaltenden Material mit einem Protein erhalten wurde, und diese Zusammensetzung gegebenenfalls einen oder mehrere Zusatzstoffe enthält, wobei diese Zusatzstoffe ausgewählt sind aus der Gruppe der Modifizierungsmittel, Alkenolpolymere, Füllstoffe, Gleitmittel, Plastifizierungsmittel, thermoplastische Polymere, Stabilisatoren, Flammschutzmittel, Farbstoffe, Nukleierungsmittel, Verschäumungsmittel, Pigmente und deren Mischungen. Das Gewichtsverhältnis des trockenen Lignins und/oder des trockenen Lignin enthaltenden Materials einerseits zum trockenen Protein anderseits in der Zusammensetzung beträgt vorzugsweise 99.95:0.05 bis 20:80, vorzugsweise 99.95:0.05 bis 40:60, vorzugsweise 98:2 bis 60:40, und vorzugsweise 97:3 bis 75:25.

Die vorliegende Erfindung betrifft im weiteren eine Ausgangsmischung, welche durch Erhitzen und Schmelzen die erfindungsgemässe biologisch abbaubare Zusammensetzung ergibt, welche dadurch gekennzeichnet ist, dass diese Ausgangsmischung die folgenden Bestandteile enthält: (i) ein Lignin und/oder ein Lignin enthaltendes Material; (ii) ein Protein, welches gegebenenfalls deprotoniert ist; und (iii) gegebenenfalls einen oder mehrere Zusatzstoffe ausgewählt aus der Gruppe umfassend Modifizierungsmittel, Alkenolpolymere, Füllstoffe, Gleitmittel, Plastifizierungsmittel, thermoplastische Polymere, Stabilisatoren, Flammschutzmittel, Farbstoffe, Nukleierungsmittel, Verschäumungsmittel, Pigmente und deren Mischungen, wobei das Gewichtsverhältnis des trockenen Lignins und/oder des trockenen Lignin enthaltenden Materials einerseits zum trockenen Protein anderseits in der Zusammensetzung vorzugsweise 99.95:0.05 bis 20:80, vorzugsweise 99.95:0.05 bis 40:60, vorzugsweise 98:2 bis 60:40, und vorzugsweise 97:3 bis 75:25 beträgt.

Die Zusammensetzung kann, je nach Wahl der Zusammensetzung, als pulverige Mischung, als sprühgetrocknetes Pulver, als Granulat, als Schmelze oder als ein daraus hergestellter Gegenstand vorliegen.

Es ist davon auszugehen, dass sich das Lignin und das Protein beim Erhitzen assoziieren oder sich miteinander verbinden, so dass nach dem Erhitzen ein Lignin/Protein-Reaktionsprodukt vorliegt. Dies ist speziell dann der Fall, wenn deprotoniertes Protein verwendet wird, wie dies im weiteren beschrieben ist. Verwendet man ein Lignin enthaltendes Material, wie beispielsweise Holz, welches im weiteren stellvertretend für andere Lignin enthaltende Materialien genannt wird, so kann ebenfalls angenommen werden, dass sich das Protein beim Erhitzen mit den im Holz enthaltenen reaktiven Gruppen des Lignins assoziiert oder chemisch verbindet. Dies kann jedenfalls dann angenommen werden, wenn ein deprotoniertes Protein verwendet wird. Auf Grund der Zunahme der Viskosität der Mischung bei der Verarbeitung erscheint eine Vernetzung stattzufinden, jedoch soll diese Erklärung die Erfindung nicht beschränken.

Mischt man beispielsweise Lignin mit Gelatine oder deprotonierter Gelatine in einem Kneter bei erhöhter Temperatur, so bildet sich anfänglich eine homogene Schmelze, wobei bei fortschreitender Verarbeitung die Viskosität der Zusammensetzung zunimmt. Durch Abkühlung der Zusammensetzung kann die Zunahme der Viskosität, bzw. der Vemetzungsvorgang, unterbrochen werden. Derart ist es möglich, in einem Zwei- oder Mehrstufenverfahren zuerst ein nicht-vemetztes oder nur wenig vernetztes bzw. vorvernetztes Granulat herzustellen, welches in einem weiteren Verfahrensschritt zum fertigen Gegenstand verarbeitet wird. Besteht das zu verarbeitende Granulat vorwiegend aus Lignin und einem Protein, so verwendet man zur Herstellung des fertigen Artikels vorzugsweise eine geheizte Presse, da durch die fortschreitende Quervernetzung und die steigende Viskosität ein Extruder oder eine Spritzgussmaschine blockiert werden könnte. Die Wahl der zur Herstellung des fertigen Artikels eingesetzten Apparatur hängt von der verwendeten Zusammensetzung ab und ist für den Fachmann problemlos.

Für die Herstellung der erfindungsgemässen Zusammensetzung geht man so vor, dass man das Lignin und/oder das Lignin enthaltende Material mit dem Protein mischt, gegebenenfalls erhitzt und anschliessend die Zusatzstoffe zugibt. Man kann aber auch die Zusatzstoffe zusammen mit dem Lignin und/oder dem Lignin enthaltenden Material mischen und erhitzen. Dabei stellt man vorzugsweise zuerst ein Granulat her, in welchem das Lignin und/oder das Lignin enthaltende Material mit dem Protein nicht vernetzt oder vorvernetzt ist. Das Granulat kann dann gegebenenfalls mit weiteren Zusatzstoffen gemischt und durch Erhitzen zu einem fertigen Gegenstand verarbeitet werden.

Verwendet man Holz in der Mischung, so kann dieses Holz mit dem Protein und gegebenenfalls mit Lignin und weiteren Zusatzstoffen imprägniert werden, so dass man ein Granulat erhält, welches durch Erhitzen zu einem erfindungsgemässen Produkt verarbeitet werden kann. Vorzugsweise verwendet man für ein solches Imprägnierungsprodukt feinteiliges oder kleinteiliges Holz. Feinteiliges Holz ist beispielsweise Sägemehl, wie solches beim Sägen von Holz anfällt. Kleinteiliges Holz sind beispielsweise Holzspäne, wie solche beim Hobeln oder beim Häckseln bzw. Schredden von Holz anfallen.

Das Gewichtsverhältnis des trockenen Lignin enthaltenden Materials, zum trockenen Protein ist vorzugsweise dasselbe, wie dies oben bereits für das Verhältnis von Lignin zum Protein angegeben ist. Es ist aber auch möglich, hierfür andere Gewichtsverhältnisse zu wählen, zum Beispiel ein Gewichtsverhältnis von 99.95:0.05 bis 70:30, vorzugsweise 98:2 bis 80:20, oder 97:3 bis 90.5:9.5.

Die Lignin-Komponente der Zusammensetzung kann nur aus Lignin oder einem Gemisch von Lignin und Lignin enthaltendem Material oder nur aus einem Lignin enthaltenden Material bestehen, je nach der Art des herzustellenden Artikels, dessen Verwendung, der gewünschten Farbe und anderer Eigenschaften sowie nach dem anzuwendenden Produktionsverfahren. Das Mischungsverhältnis ist vor allem von den im Endprodukt gewünschten Eigenschaften abhängig. Eine wichtige Funktion kommt dem Vernetzunggrad und den Zusatzstoffen zu. Durch Zugabe von Weichmachern und andern Zusatzstoffen, insbesondere von thermoplastischen Polymeren, wie solche im weiteren beschrieben sind, können die Eigenschaften der erfindungsgemässen Zusammensetzung optimiert werden, was für den Fachmann problemlos ist.

Als Lignin sind alle Lignine verwendbar, wie solche beispielsweise aus dem Holz der Tanne, Fichte, Eiche, wie der Roteiche, der Espe, der Kiefer oder der Föhre oder aus Stroh und vergleichbaren Materialien gewonnen werden, beispielsweise in Form von Sulfat-Lignin oder Kraft-Lignin, Sulfonat-Lignin, Organosolv-Lignin, mit Dampfdruck behandeltes Lignin und mit Säure hydrolysiertes Lignin. Schwefelfreie Lignine und Organosolv-Lignin sind bevorzugt. Letztere weisen im Verbund mit dem Protein auch etwas andere Eigenschaft auf im Vergleich mit Zusammensetzungen, welche in entsprechender Weise aus Sulfatgruppen oder Sulfonatgruppen enthaltenden Ligninen hergestellt worden sind. Je nach den gewünschten Eigenschaften des herzustellenden Produktes, insbesondere bezüglich der mechanischen Eigenschaften, der Wasserbeständigkeit resp. Wasserlöslichkeit oder der Farbe, mag ein schwefelhaltiges Lignin bevorzugt sein. Dabei können sich je nach der Herkunft und der Herstellung gleiche Ligninarten etwas unterschiedlich verhalten. Dies ist aber ein Problem der Optimierung. Ebenso sind alle Holzarten sowie andere Lignin enthaltende Materialien für die Herstellung der erfindungsgemässen Zusammensetzung verwendbar. Bevorzugt ist Holz.

Der hierin verwendete Begriff "Lignin" umfasst ebenso chemisch verändertes Lignin, beispielsweise alkoxyliertes Lignin, wie äthoxyliertes oder propoxyliertes Lignin, welches durch Behandeln von Lignin mit Äthylenoxid oder Propylenoxid in alkalischem Medium erhältlich ist. Solche Ligninderivate sind an sich bekannt.

Das hierin verwendete Protein ist vorzugsweise ein pflanzliches oder tierisches Protein und an sich bekannt, wie beispielsweise Kollagen, Gelatine oder Kasein, jedoch sind alle kommerziell erhältlichen Proteine verwendbar. Unter den Begriff "Proteine" fallen auch chemisch modifizierte, d.h. derivatisierte, Proteine, beispielsweise solche, die mit Acrylsäure oder Methacrylsäure oder mit Glycidylmethacrylat modifiziert sind, von welchen chemisch modifizierte Gelatine bevorzugt ist. Letztere können durch Elektronen- oder UV-Strahlen vernetzt werden. Solche derivatisierte Proteine sind an sich bekannt. Das eingesetzte Protein enthält vorzugsweise mindestens etwa 5 Gew.-% Wasser bezogen auf das Trockengewicht des Proteins, vorzugsweise etwa 6 Gew.-% bis 20 Gew.-% Wasser oder mehr, vorzugsweise 8 Gew.-% bis 18 Gew.-%. Es können aber auch Proteine mit weniger als 5 Gew.-% Wasser bzw. nahezu wasserfreie Proteine eingesetzt werden. Bevorzugt sind Gelatine und derivatisierte Gelatine.

Lignin und/oder Lignin enthaltende Materialien können, wie bereits oben beschrieben, in verschiedener Weise mit Proteinen zur erfindungsgemässen Zusammensetzung verarbeitet werden. Die Verschmelzung der Komponenten kann in einem weiten Temperaturbereich, d.i. von etwa 80°C bis etwa 260°C, vorgenommen werden. Bevorzugt ist ein Bereich von 100°C bis 200°C, vorzugsweise auf 100°C bis 170°C, und vorzugsweise etwa 120° bis 165°C, gegebenenfalls zusammen mit hierin genannten Zusatzstoffen. Der Erweichungs- bzw. Schmelzpunkt von Lignin ist je nach dessen Molekulargewicht und dem zur Gewinnung des Lignins verwendeten Herstellungsverfahren bei etwa 80°C bis etwa 145°C. Lignin im Gemisch mit Protein gemäss der vorliegenden Erfindung kann schon bei Temperaturen von 80°C bis 100°C verarbeitet werden. Die Verschmelzung der Ausgangsmaterialien kann beispielsweise in einem Mischer oder Kneter bei den genannten Temperaturen ausgeführt werden, wobei vorzugsweise ein Granulat hergestellt wird. Es ist auch möglich, die Ausgangsstoffe in einem Extruder zu verschmelzen und anschliessend zu granulieren, wobei die Prozessführung und die Zusammensetzung so zu wählen sind, dass der Extruder nicht blockiert wird.

Ein besondere Ausführungsform der vorliegenden Erfindung besteht darin, dass man ein deprotoniertes Protein verwendet, d.i. ein Protein, welches bei erhöhtem Säurewert (p_{H}) deprotoniert wurde. Proteine sind Polypeptide, welche Carboxylgruppen sowie Aminogruppen als Seitengruppen in demselben Molekül enthalten. Proteine sind deshalb amphoter und weisen einen sogenannten isoelektrischen Punkt auf, bei welchem die im Molekül vorhandenen negativen und positiven elektrischen Ladungen gleich gross sind. Für Gelatine beispielsweise, je nach Art der Herstellung, liegt dieser isoelektrische Punkt beim Säurewert von etwa p_{H} 4.7 bis p_{H} 5.0. Für Gelatine gilt im weiteren, dass die als Seitenkette im Molekül vorhandenen Säuregruppen bei etwa p_{H} 1.5 bis p_{H} 6.5 neutralisiert werden, während die verschiedenen Aminogruppen im Bereich von etwa p_{H} 8 bis p_{H} 11.5 deprotoniert werden. Dies bedeutet, dass im Bereich von p_{H} 6.5 praktisch alle Carboxylgruppen neutralisiert sind. Wird der p_{H} erhöht, so beginnt ab p_{H} 8 die Deprotonierung bestimmter Aminogruppen, wobei bei p_{H} 11.5 die Deprotonierung aller Aminogruppen erreicht ist. Deprotoniertes Polypeptid enthält freie reaktionsfähige Elektronen, die sich mit Lignin leicht assoziieren und mit diesem reagieren können. Je höher der Deprotonierungsgrad des Proteins und/oder je mehr deprotoniertes Protein dem Lignin zugesetzt wird, umso stärker wird die Lignin-Komponente modifiziert. Die erfindungsgemässe Zusammensetzung lässt sich in den genannten Bereichen variieren, so dass sich, je nach den gewünschten mechanischen Eigenschaften, der Wasserbeständigkeit resp. Wasserlöslichkeit oder der Farbe, Endprodukte mit unterschiedlichen Eigenschaften herstellen lassen. Bevorzugt wird ein deprotoniertes Protein verwendet, welches bei mindestens p_{H} 8, vorzugsweise bei p_{H} 10, und vorzugsweise bei p_{H} 11.5 deprotoniert wurde, und in welchem vorwiegend alle oder praktisch alle Aminogruppen deprotoniert sind. Dabei ist das deprotonierte Protein mit Bezug auf die im Protein enthaltenen Carboxylgruppen vorzugsweise ein Alkali- oder Erdalkalisalz, vorzugsweise ein Natrium- oder Kaliumsalz. Es wird durch Behandeln des Proteins mit dem entsprechenden Alkali- oder Erdalkalihydroxid oder den entsprechenden Karbonaten oder Bikarbonaten in wässrigem Medium hergestellt. Bevorzugte Gewichtsverhältnisse des trockenen Lignins und/oder des Lignin enthaltenden Materials einerseits zum deprotonierten Protein (berechnet auf Trockensubstanz) andererseits sind bereits oben angegeben worden.

Gewichtsverhältnisse von 97:3 bis 85:15 und 97:3 bis 90.5:9.5 können auch verwendet werden.

In diesem Sinne betrifft die Erfindung eine biologisch abbaubare Zusammensetzung, welche dadurch gekennzeichnet ist, dass diese durch Erhitzen und Verschmelzen von mindestens einem Lignin und/oder einem Lignin enthaltenden Material mit einem deprotonierten Protein erhalten wurde, und diese Zusammensetzung gegebenenfalls einen oder mehrere der oben genannten Zusatzstoffe enthält.

Zur Herstellung der erfindungsgemässen Zusammensetzung, welche deprotoniertes Protein enthält, geht man analog vor, wie dies oben für Zusammensetzungen auf der Basis von nicht-deprotoniertem Protein beschrieben ist. Das deprotonierte Protein wird mit dem Lignin und/oder dem Lignin enthaltenden Material gemischt, wobei man die gegebenenfalls anwesenden Zusatzstoffe sofort oder anschliessend zugibt, worauf das Gemisch zu einer gleichmässigen Mischung verschmolzen und gegebenenfalls granuliert wird. Hierzu verwendet man, je nach der gewählten Zusammensetzung, beispielsweise einen Kneter, Mischer oder Extruder. Das deprotonierte Protein kann auch während des Mischverfahrens bzw. Schmelzverfahrens *in situ* hergestellt werden, indem der Ausgangsmischung, welche nicht-deprotoniertes Protein enthält, trockenes oder wässriges Alkalihydroxid, Erdalkalihydroxid, Alkalikarbonat oder Erdalkali- karbonat zugesetzt wird. Ein allfälliger Überschuss an Alkali im Reaktionsprodukt wird in der Zusammensetzung vorzugsweise neutralisiert, beispielsweise durch Zugabe von weiterem Lignin oder eines Lignin enthaltenden Materials, wie z.B. von Holz, oder von einer mehrbasischen Säure, wie z.B. Weinsäure oder Zitronensäure. Der Säurewert (p_{H}) der hergestellten Zusammensetzung ist vorzugsweise neutral und liegt vorzugsweise bei etwa 6.5 bis 7.5.

Eine mögliche Ausführungsform besteht darin, das man sowohl das Protein als auch das Lignin bei erhöhtem Säurewert in Wasser löst und die gegebenenfalls anwesenden Zusatzstoffe zugibt und hierauf die Zusammensetzung weiter verarbeitet. Die gelösten Lignin- und Proteinkomponenten reagieren derart intensiver miteinander.

Die Vernetzung der Lignin- und Proteinkomponente bewirkt, dass die Zusammensetzung aushärtet. So stellt man in einem ersten Schritt vorzugsweise ein nicht-vernetztes bzw. nichtausgehärtetes oder nur teilweise vernetztes bzw. teilweise ausgehärtetes Granulat her, welches man in einem zweiten Schritt unter weiterer Vemetzung bzw. Aushärtung zum fertigen Produkt verarbeitet. Eine diesbezügliche Ausführungsform besteht darin, dass man in einem ersten Schritt eine wässrige Ausgangsmischung herstellt, in welcher die Ausgangsmaterialien in gelöster, aufgeschlämmter oder/oder emulgierter Form vorliegen und dass man diese Ausgangsmischung trocknet, vorzugsweise sprühtrocknet, worauf ein getrocknetes bzw. sprühgetrocknetes Granulat erhalten wird. Dieses Granulat kann in einem zweiten Schritt unter weiterer Vernetzung zum fertigen Artikel verarbeitet werden. Enthält diese Ausgangsmischung ein Füllmaterial, wie z.B. Cellulosefasern, und/oder ein Lignin enthaltendes Material, wie z.B. Holz, vorzugsweise Sägemehl, so erhält man derart ein Imprägnierungsprodukt, vorzugsweise ein impägnierte Holz, vorzugsweise ein imprägniertes sprühgetrocknetes Sägemehl, welches weiter zu einem geformten Gegenstand verarbeitet werden kann. In diesem Sinne betrifft die vorliegende Erfindung ein Verfahren zur Herstellung eines imprägnierten Granulates, welches vorzugsweise ein sprühgetrocknetes Granulat darstellt, dadurch gekennzeichnet, dass man in einem ersten Schritt (i) eine wässrige Ausgangsmischung herstellt, in welcher die Ausgangsmaterialien in gelöster, aufgeschlämmter und/oder emulgierte Form vorliegen und dieses Ausgangsmischung vorzugsweise einen Füllstoff und/oder ein Lignin enthaltendes Material, vorzugsweise Holz, enthält, und dass man (ii) diese Ausgangsmischung so trocknet, vorzugsweise sprühtrocknet, dass ein Granulat, vorzugsweise ein sprühgetrocknetes Granulat, erhalten wird, worin die Ligninkomponente und die Proteinkomponente nicht oder nur wenig vernetzt sind, so dass der eigentliche Vemetzungsvorgang bzw. die Aushärtung erst beim zweiten Verfahrensschritt, das ist bei der Herstellung des geformten Artikels, stattfindet. Die vorliegende Erfindung betrifft auch das derart hergestellte Granulat sowie die geformten Artikel, welche aus einem solchen Granulat hergestellt sind. Mittels dieser Methode können relative leichte schaumartige Teile gefertigt werden, welche verhälnismässig schnell bioabbaubar sind.

Die erfindungsgemässe Zusammensetzung, welche durch Erhitzen und Verschmelzen von mindestens einem Lignin und/oder einem Lignin enthaltenden Material mit einem gegebenenfalls deprotonierten Protein erhalten wird, wie dies oben beschrieben ist, kann als solche verwendet und zu geformten Gegenständen weiterverarbeitet werden. Die Zusammensetzung kann aber auch Zusatzstoffe enthalten, welche oben auch als Komponente (iii) bezeichnet sind. Enthält die Zusammensetzung eine oder mehrere Zusatzstoffe, so beträgt die Summe des Gewichtsanteils der Lignin-Komponente und der Proteinkomponente bezogen auf das Gesamtgewicht der Zusammensetzung mindestens 20%, vorzugsweise mindestens 40% und vorzugsweise mindestens 50%, und insbesondere mindestens 60%, vorzugsweise mindestens 80%, jeweils gerechnet als Trockensubstanz.

Die Trockensubstanz aller unter Komponente (iii) genannten Zusatzstoffe in der Zusammensetzung beträgt 0.2 bis 80 Gew.-%, vorzugsweise 2 bis 60 Gew.-%, vorzugsweise 5 bis 50 Gew.-%, oder auch 5 bis 40 Gew.-%, vorzugsweise 5 bis 20 Gew.-%, bezogen auf das Gesamtgewicht der Zusammensetzung.

Alkenolpolymere im Sinne der vorliegenden Erfindung sind partiell hydrolysierte Polyvinylacetate mit einem Hydrolysierungsgrad von 50 Mol% bis 100 Mol%, vorzugsweise von 65 Mol% bis 100 Mol%. Diese Polymere sind als Polyvinylalkohole bekannt und sind je nach dem Hydrolysierungsgrad wasserlöslich. Wasserlösliche Polyvinylalkohole sind in der Regel in ihrer reinen Form nicht mehr thermoplastisch und werden mit Zusätzen von an sich bekannten Plastifizierungsmitteln verarbeitet. Polyvinylalkohole mit einem Hydrolysierungsgrad von 75-99 Mol%, vorzugsweise 87-98 Mol%, insbesondere 75-89 Mol% und 96-99 Mol% und einem Molekulargewicht von etwa 15'000 bis 240'000, vorzugsweise 15'000 bis 180'000, vorzugsweise 40'000 bis 110'000, vorzugsweise 40'000 bis 80'000, sind infolge ihrer biologischen Abbaubarkeit bevorzugt. Alkenolpolymere verwendet man vorzugsweise in einer Konzentration von 5-40 Gew.-%, vorzugsweise von 5 bis 30% und vorzugsweise von 10-25 Gew.-%, bezogen auf das Gesamtgewicht der Zusammensetzung.

Füllstoffe sind beispielsweise Magnesiumoxid, Siliziumoxid oder Aluminiumoxid, Chitosan, Cellulosefasem, Celluloseester, Celluloseäther, Stärkeester, Stärkeäther, Hydroxyalkylcellulose, Hydroxyalkylstärke, Keramikpulver. Holz ist ein Lignin enthaltendes Material und wird wie oben beschrieben als solches eingesetzt. Wird Holz in vergleichsweise grossem Überschuss eingesetzt, so kann man fallweise Holz auch als Füllmaterial ansehen. Als solches verwendet man vorzugsweise Holzpulver, wie Sägemehl. Vorzugsweise verwendet man die Füllstoffe, je nach deren Art, in einem Gewichtsanteil von 3-50%, vorzugsweise 5-30%, oder 5-15%.

Gleitmittel sind beispielsweise Aluminiumstearat, Magnesiumstearat, Lecithine oder Monooder Diglyceride, welche vorzugsweise in einer Konzentration von 0.5 bis 5 Gew.-%, vorzugsweise 0.7 bis 1.5 Gew.-%, anwesend sind.

Plastifizierungsmittel sind beispielsweise Polyalkylenoxide, vorzugsweise Polyäthylenglykole oder Polypropylenglykole, Äthylenglykol, Propylenglykol, Sorbitol, Glycerin, niederpolymere Glycerine, Glycerinmono-, di- oder triacetat, Harnstoff, Pentaerithrit, Triäthylcitrat, Tributylcitrat, Fettalkohole, wie Stearylalkohol, sowie weitere an sich bekannte Plastifizierungsmittel, welche, je nach dem Plastifizierungsmittel, in einer Konzentration von 0.5 bis 40 Gew.-%, vorzugsweise 0.5 bis 25 Gew.-%, vorzugsweise 1.0 bis 15 Gew.-% oder auch 1.0 bis 10 Gew.-% zugesetzt werden.

Synthetische thermoplastische Polymere sind ausgewählt aus der Gruppe der Polyolefine, vorzugsweise Polyäthylen oder Polypropylen; Polyvinylacetate und partiell hydrolysierte Polyvinylacetate mit einem Hydrolysierungsgrad von 10 Mol% bis 50 Mol%; Polystyrol; Polyacrylsäureester; Polymethacrylsäureester; thermoplastische Polykondensate, vorzugsweise thermoplastische Polyester, Polyamide, Polyesteramide und Poly(amidanhydrid); Alkylen/Acrylsäure-Copolymere oder Alkylen/Methacrylsäure-Copolymere, vorzugsweise Äthylen/Acrylsäure-Copolymere; Alkylen/Maleinanhydrid-Copolymere; Alkylen/-Vinylalkohol-Copolymere. Solche Polymere sind an sich bekannt. Bevorzugte Copolymere aus der Gruppe der Äthylen/Acrylsäure-Copolymere sind solche, in welchen die Carboxylgruppen teilweise in Salzform, vorzugsweise als Natrium- oder Kaliumsalz, vorliegen.

Die vorgenannten thermoplastischen Polymere und Copolymere sind vorzugsweise wasserunlöslich, das heisst, sie lösen sich zu weniger als 5 Gew.-%, vorzugsweise weniger als 3 Gew.-% und vorzugsweise weniger als 2 Gew.-%, in Wasser bei Raumtemperatur (20°C).

Vorzugsweise verwendet man diese Polymere und Copolymere in einer gesamten Konzentration von 0.2 Gew.-% bis 70 Gew.-%, vorzugsweise 0.5 Gew.-% bis 50 Gew.-%, vorzugsweise 0.5 Gew.-% bis 30 Gew.-%, oder auch 0.5 Gew.-% bis 20 Gew.-%, vorzugsweise 1 Gew.-% bis 10 Gew.-% bezogen auf das Gesamtgewicht der Zusammensetzung.

Bevorzugt sind bioabbaubare Polymere. Bevorzugte Polyamide sind an sich bekannte bioabbaubare Polyamide, Polyesteramide und Poly(amid-anhydrid). Bevorzugte Copolymere sind Äthylen/Acrylsäure Copolymere und ÄthylenNinylalkohol Copolymere. Bevorzugte bioabbaubare thermoplastische Polyester sind Polymere von alifatischen Hydroxycarbonsäuren mit 1 bis 24 Kohlenstoffatomen, welche beispielsweise hergestellt sind aus den entsprechenden Hydroxycarbonsäuren oder den entsprechenden Lactonen oder Lactiden. Die Herstellung solcher Polyester ist an sich bekannt. Solche bevorzugte thermoplastische Polyester sind vorzugsweise Homopolymere von alfa-Hydroxycarbonsäuren wie beispielsweise Polyglykolsäuren, Homopolymere hergestellt von Milchsäure oder vom entsprechenden Lactid; von beta-Hydroxycarbonsäuren, vorzugsweise von beta-Hydroxypropionsäure bzw. von beta-Propiolacton oder von beta-Hydroxybuttersäure (Poly-beta-Hydroxybutyrat); von gamma-Hydroxycarbonsäuren, wie beispielsweise von gamma-Hydroxybuttersäure bzw. von gamma-Butyrolacton oder von gamma-Valerolacton; von epsilon-Hydroxycarbonsäuren, wie beispielsweise von 6-Hydroxycapronsäure bzw. von dem entsprechenden epsilon-Caprolacton, aus welchem man Poly-epsilon-caprolactone erhält. Bevorzugt sind die Polymere der Milchsäure, von gamma-Hydroxybuttersäure, von gamma-Valerolacton sowie Polymere von epsilon-Caprolacton. Insbesondere bevorzugt sind Poly-epsilon-caprolactone.

Bevorzugte thermoplastische Copolymere sind Polyhydroxybutyrat/valerate sowie Copolymere von den im vorgehenden Abschnitt genannten Hydroxycarbonsäuren mit alifatischen oder aromatischen Diisocyanaten, wie beispielsweise mit Hexamethylendiisocyanat. Andere Copolymere sind an sich bekannt und können je nach Bedarf ebenso verwendet werden. Ebenso sind Blockcopolymere, welche eine der genannten Hydroxycarbonsäuren, wie zum Beispiel beta-Hydroxybutyrat, enthalten, verwendbar.

Homopolymere und Copolymere von Hydroxycarbonsäuren haben einen Erweichungspunkt vorzugsweise zwischen 50°C und 170°C, vorzugsweise bei 60°C oder höher und ein durchschnittliches Molekulargewicht von etwa 40'000 oder höher.

Für die Herstellung von dünnwandigen Produkten, beispielsweise von Folien (oft auch als Filme bezeichnet), liegt das Gewichtsverhältnis der Lignin/Protein-Komponente einerseits zum Homopolymeren und/oder Copolymeren der Hydroxycarbonsäure andererseits innerhalb der gesamten Zusammensetzung in der Regel vorzugsweise bei 1:3 bis 2:1 und vorzugsweise 1:2 bis 1:1. Die Lignin/Protein-Komponente und das oder die Polymere der Hydroxycarbonsäuren zusammen, insbesondere für die Verwendung zur Herstellung von Folien, sind in der gesamten Zusammensetzung mit einem Gewichtsanteil von 30-90%, vorzugsweise 35-80% und vorzugsweise 40-70% anwesend, berechnet auf das Gesamtgewicht der Trockensubstanz dieser beiden Komponenten.

Von den Alkylen/Vinylalkohol-Copolymeren sind die Äthylen/Vinylalkohol-Copolymere bevorzugt, vorzugsweise solche mit einem Vinylalkoholanteil von mindestens 50 Mol%, vorzugsweise mindestens 58 Mol%. Meist bevorzugt ist ein Vinylalkoholanteil von 65 Mol% bis 85 Mol%. Alkylen/Vinylalkohol-Copolymere verwendet man vorzugsweise zusammen mit den oben beschriebenen Polyvinylalkoholen, vorzugsweise im Gewichtsverhältnis von 4:1 bis 1:4, vorzugsweise im Gewichtsverhältnis von 2:1 bis 1:2. Bevorzugt sind Polymere mit einem Erweichungspunkt von 260°C oder niedriger, vorzugsweise von 220°C oder niedriger und besonders bevorzugt mit 110°C bis 210°C. Polycaprolactone können schon bei 60°C verarbeitet werden, so dass die untere Temperaturgrenze der Polymere je nach Auswahl bei etwa 60°C liegt.

In der Lignin/Protein-Komponente kann ein Teil des Lignins durch Stärke ersetzt werden, so dass eine Lignin/Stärke/Protein-Komponente vorliegt. Es wird davon ausgegangen, dass Stärke sich in anderer Form mit dem Protein verbindet als das Lignin. Unter dem Begriff "Lignin/Protein-Komponente" ist hierin auch die Lignin/Stärke/Protein-Komponente zu verstehen. Das Gesamtgewicht der Gewichtsteile von Lignin und Stärke in der Lignin/Protein-Komponente entspricht jeweils den oben für Lignin angegebenen Gewichtsteilen für die Lignin/Protein-Komponente, welche nur Lignin enthält. Ersetzt man einen Teil des Lignins durch Stärke, so ist das Verhältnis von Lignin zu Stärke vorzugsweise 10:1 bis 1:10 und vorzugsweise 8:1 bis 3:1, vorzugsweise 5:1 bis 1:1.

Der hierin verwendete Begriff "Stärke" beinhaltet pflanzliche Stärke, wie diese z.B. aus Kartoffeln, Weizen, Mais, Hafer, Reis oder andern Stärke enthaltenden Pflanzen gewonnen wird. Solche Stärke enthält vorwiegend Amylose und Amylopectin. Kartoffelstärke enthält in der Regel etwa 30 Gew.-% Amylose während gewisse Maissorten beispielsweise 75 Gew.-% oder mehr Amylose enthalten oder nahezu vollständig aus Amylopektin bestehen können. Die Zusammensetzungen der vorliegenden Erfindung können mit all diesen Stärkearten hergestellt werden. Bevorzugt sind Maisstärke und Kartoffelstärke.

Der hierin verwendete Begriff "Stärke" umfasst ebenso chemisch veränderte Stärke, beispielsweise Stärkeester, vorzugsweise Stärkeacetate, soweit die Reaktionsfähigkeit des Stärke-Derivats nicht beeinträchtigt ist und mit dem Protein, vorzugsweise mit dem deprotonierten Protein, sich zu assoziieren vermag, was in der Regel dann der Fall ist, wenn der Substitutionsgrad des Stärkederivats den Wert von 0.05 nicht übersteigt.

Modifizierungsmittel sind beispielsweise Säureanhydride von Carbonsäuren und Polycarbonsäuren, wie beispielsweise Essigsäureanhydrid, Propionsäureanhydrid, Buttersäureanhydrid, Valeriansäureanhydrid, Stearinsäureanhydrid, Bernsteinsäureanhydrid, Benzoesäureanhydrid, Phtalsäureanhydrid; Epichlorhydrin; Epoxidverbindungen; Aldehyde wie beispielsweise Formaldehyd, Acetaldehyd, Propioaldehyd, Butyraldehyd, Valeraldehyd, Caproaldehyd, Stearaldehyd, Crotonaldehyd, Benzaldehyd, Furfurol. Diese Modifizierungsmittel vermögen, insbesondere unter der Einwirkung von Hitze, mit dem Lignin und/oder mit dem Protein zu reagieren und können die beiden Komponenten vemetzen. Modifizierungsmittel sind auch solche, welche unter dem Einfluss von Licht, insbesondere Elektronenstrahlen oder UV-Licht und gegebenenfalls in Gegenwart von entsprechenden an sich bekannten Aktivatoren, das Protein vemetzen. Modifizierungsmittel verwendet man vorzugsweise in Konzentrationen von 0.1-6 Gew.-%, und vorzugsweise von 2-5 Gew.-%, bezogen auf das Gesamtgewicht des Proteins.

Stabilisatoren sind beispielsweise an sich bekannte Antioxydantien, UV-Absorber oder UV-Quencher oder Bakterizide oder Fungizide und werden in an sich bekannten Mengen verwendet.

Flammschutzmittel sind an sich bekannt. Sie enthalten z.B. Phosphor, Schwefel oder Halogen und sind anwesend in Gewichtsmengen von 0.1 bis 10%, vorzugsweise von 1 to 6%, und meist bevorzugt von 2 to 4%, bezogen auf das Gesamtgewicht der Zusammensetzung. Meist bevorzugte Flammschutzmittel sind Guanidin-phosphat, Ammonium-polyphosphat, Äthylendiamin-polyphosphat (gegebenenfalls zusammen mit Dinatrium-orthophosphat), Guanidin-sulphat und/oder Ammonium-sulphat. Diese werden in den angegebenen Mengen eingesetzt. Lignin und Proteine bilden zusammen mit wenig Flammschutzmittel eine ausgezeichnete selbstverlöschende Zusammensetzung.

Als Farbstoffe werden vorzugsweise an sich bekannte bioabbaubare Farbstoffe in an sich bekannter Menge eingesetzt. Nukleirungsmittel sind beispielsweise die genannten Füllstoffe oder Magnesiumsilikat (micro talcum) mit einer Teilchengrösse von ca. 0.1 bis 5 Mikron. Diese sind vorzugsweise in einer Konzentration von 0.1 bis 3 Gew.-%, vorzugsweise 0.1 bis 0.5 Gew.-% anwesend.

Verschäumungsmittel sind an sich bekannt, wie zum Beispiel eine Kombination von Natriumbikarbonat mit Zitronensäure und ähnliche kommerziell erhältliche Verschäumungsmittel. Es ist möglich gasförmiges Kohlendioxid direkt der im Extruder geschmolzenen Zusammensetzung zuzusetzen. Verschäumte Materialien werden oft als Verpackungsmittel eingesetzt, sei es in loser oder in speziell auf den zu verpackenden Gegenstand, beispielsweise pharmazeutische Ampullen, zugeschnitter Form. Die erfindungsgemässe Zusammensetzung ist auch für die Herstellung solcher Schäume geeignet. Das Verschäumungsmittel setzt man vorzugsweise in einer Konzentration von 0.1 bis 0.2 Gew.-% zu.

Die erfindungsgemässe Zusammensetzung kann mit an sich bekannten Verfahren verarbeitet werden, unter Verwendung von an sich bekannten Vorrichtungen, welche, je nach Auswahl der Zusammensetzung, geeignet sind für Pressformen, Spritzgiessen, Blasformen, Extrudieren und Coextrudieren (Stab-, Rohr- und Filmextrudieren) oder Vacuumformen, um an sich bekannte Gegenstände herzustellen. Diese Artikel umfassen beispielsweise Reklameartikel, Etiketten, Becher, Blumentöpfe, Fadenspulen, Kerzenbecher, Halterungen, Flaschen, Geschirr, Bestecke und dergleichen, Verpackungsmaterialien, wie Folien, laminierte Folien, Säcke, Beutei, Schäume, Rohre, Stäbe, Granulate oder Pulver.

Die im Folgenden gegebenen Beispiele erläutern die Erfindung.

### Beispiel 1 (Vergleich)

a) In einem Mischer werden 5 Teile handelsübliche Gelatine (100 bloom, isoelektrischer Punkt bei p_{H} 4.9) in 35 Teile Wasser eingerührt. Die erhaltene wässrige Gelatine wird mit 60 Teilen Organosolv-Lignin und mit 5 Teilen Glycerin versetzt. Das Gemisch wird nun auf 65°C unter Rühren erwärmt, anschliessend abkühlen gelassen, auf einen Wassergehalt von 18% getrocknet, granuliert und hierauf in einer geheizten Presse während 10 Minuten unter Druck auf 150°C erhitzt. Man erhält ein stabiles Formteil mit sehr guten Gebrauchseigenschaften.
b) In einem Mischer werden 5 Teile handelsübliche Gelatine (100 bloom, isoelektrischer Punkt bei p_{H} 4.9) in 35 Teile Wasser eingerührt. Die erhaltene Mischung wird mit Natriumhydroxid auf einen Säurewert (p_{H}) von 11.5 eingestellt. Die erhaltene wässrige Gelatine wird mit 60 Teilen Organosolv-Lignin und mit 5 Teilen Glycerin versetzt. Das Gemisch wird nun auf 65°C unter Rühren erwärmt und weiter behandelt, wie in Abschnitt Beispiel 1a) beschrieben. Man erhält stabile Formteile mit sehr guten Gebrauchseigenschaften.

### Beispiel 2 (Vergleich)

a) In einem Mischer werden 18 Teile handelsübliche Gelatine (150 bloom, isoelektrischer Punkt bei p_{H} 4.9) in 200 Teile Wasser eingerührt. Die erhaltene wässrige Gelatine wird mit 42 Teilen Organosolv-Lignin versetzt. Anschliessend werden 8 Teile Glycerin und 80 Teile Sägemehl gut eingerührt und eine Stunde unter Rühren stehen gelassen. Das erhaltene Produkt wird nun abgetrennt und über Nacht trocknen gelassen, wobei sich ein Wassergehalt von etwa 18% einstellt. Das erhaltene Pulver wird nun in einer geheizten Presse unter Druck während 10 Minuten auf 160°C erhitzt und zu Teststücken verarbeitet.
b) In einem Mischer werden 18 Teile handelsübliche Gelatine (150 bloom, isoelektrischer Punkt bei p_{H} 4.9) in 200 Teile Wasser eingerührt. Die erhaltene Mischung wird mit Natriumhydroxid auf einen Säurewert (p_{H}) von 11.5 eingestellt. Die derart erhaltene wässrige Gelatine wird mit 42 Teilen Organosolv-Lignin versetzt. Dann werden 8 Teile Glycerin und 80 Teile Sägemehl gut eingerührt und weiter verfahren, wie in diesem Beispiel 2, Abschnitt a) angegeben ist.
c) Beispiel 2a) und Beispiel 2b) werden wiederholt, mit der Massnahme, dass nach der Zugabe von Organosolv-Lignin der Säurewert emeut auf p_{H} 11 eingestellt und die Mischung eine Stunde lang gerührt wird bevor 8 Teile Glycerin und 80 Teile Sägemehl zugegeben werden. In den Beispielen 2a), 2b) und 2c) werden stabile Formteile mit sehr guten Gebrauchseigenschaften erhalten.

### Beispiel 3 (Vergleich)

a) In einem Mischer werden 18 Teile handelsübliche Gelatine (150 bloom, isoelektrischer Punkt bei p_{H} 4.9) in 300 Teile Wasser eingerührt. Anschliessend werden 40 Teilen Organosolv-Lignin, 8 Teile Glycerin und 60 Teile Sägemehl gut eingerührt und anschliessend sprühgetrocknet, wobei ein Granulat mit einem Wassergehalt von 16% erhalten wird. Das erhaltene Granulat kann in einer geheizten Presse unter Anwendung unterschiedlicher Drucke zu stabilen Formkörpern unterschiedlicher Dichte verarbeitet werden. Dabei verwendet man eine Heizdauer von 1 Minute bis 10 Minuten, eine Temperatur von 110°C bis 160°C und einen Druck von 1.1 x 10⁵ - 10⁶ Pa (1.1 bar bis 10 bar).
b) In einem Mischer werden 18 Teile handelsübliche Gelatine (150 bloom, isoelektrischer Punkt bei p_{H} 4.9) in 300 Teile Wasser eingerührt. Die erhaltene Mischung wird mit Natriumhydroxid auf einen Säurewert (p_{H}) von 11.5 eingestellt. Anschliessend werden 40 Teilen Organosolv-Lignin, 8 Teile Glycerin und 60 Teile Sägemehl gut eingerührt und anschliessend sprühgetrocknet, wobei ein Granulat mit einem Wassergehalt von 16% erhalten wird. Es wird weiter verfahren, wie in diesem Beispiel 3, Abschnitt a) angegeben ist.

### Beispiel 4

50 Teile des erhaltenen Pulvers, je erhalten gemäss den Beispielen 1a), 1b), 2a), 2b), 2c), 3a) und 3b) werden mit 12.5 Teile mit vorplastifiziertem Polyvinylalkohol (Versuch 4a:) mit einem durchschnittlichem Molekulargewicht von etwa 60'000 und einem Hydrolysierungsgrad von etwa 87-89 Mol% und (Versuch 4b:) mit einem durchschnittlichen Molekulargewicht von 108'000 und einem Hydrolysierungsgrad von 98-99 Mol%, sowie jeweils mit 5 Teilen Glycerin intensiv vermischt. Der Wassergehalt wird auf 20 Gew.-%, bezogen auf das Gesamtgewicht der Mischung eingestellt. Diese Mischung wird in einer Presse während 5 Minuten auf 150°C, und in einem weiteren Versuch während 10 Minuten auf 130°C, erhitzt jeweils bei Drücken von 1.5 x 10⁵, 5 x 10⁵ und 2 x 10⁶ Pa (1.5 bar, 5 bar und 20 bar). Es werden Teststücke mit sehr guten Gebrauchseigenschaften erhalten. In dieser Weise können verschiedene Formen, wie Fadenspulen, Etiketten, Verpackungsformen mit niederer Dichte beispielsweise für Ampullen, hergestellt werden.

### Beispiel 5

100 Teile des erhaltenen Granulats, jeweils gemäss den Versuchen aus den Beispielen 1a), 1b), 2a), 2b), 2c), 3a) und 3b) werden jeweils mit (a) 85 Teilen Poly-epsilon-Caprolacton und (b) 120 Teilen Poly-epsilon-Caprolacton, sowie mit 50 Teilen Polyvinylalkohol (Hydrolysierungsgrad: 88%, durchschnittliches Molekulargewicht: ca. 80'000), 50 Teilen Äthylenvinylalkohol-copolymer (mit ca. 44 Mol% Äthylenanteil), 15 Teilen Polyäthylenglykol (durchschnittliches Molekulargewicht 15'000) und 5 Teilen Natriumstearat in einem Mischer gut gemischt und anschliessend im Extruder in an sich bekannter Weise zu einem Granulat extrudiert. Die Temperatur der Schmelze im Extruder wird bei 165°C gehalten. Das erhaltene Granulat mit einem Wassergehalt von weniger als 9% kann nun zu Folien verarbeitet und tiefgezogen oder zu andern geformten Gegenständen verarbeitet werden.

### Beispiel 6

Die folgenden Zusammensetzungen werden analog zu Beispiel 5 hergestellt und geformten Artikeln verarbeitet:

**Tabelle 1**

| Beispiel Nr. | Lignin/ Gelatine | PCL | PVOH | Polymer |
|---|---|---|---|---|
| 6a | 30.5% | 30.5% | 10% | EVOH,10% |
| 6b | 39.5% | 34.5% | 10% | EVOH, 5% |
| 6c | 30.5% | 30% | -.- | Polyesteramid, 20% |
| 6d | 15% | 15% | 17% | EVOH, 30% |
| 6e | 30% | 50% | -.- | Polyäthy-len, 4% |
| 6f | 50% | 25.5% | -.- | EVOH,6.5% EAA, 5% |
| Lignin/Gelatine-Reaktionsprodukt, 25% Gelatine (Bsp. 6a, 6b); | | | | |
| 40% Gelatine (Bsp. 6c, 6d); 50% Gelatine (Bsp. 6e); 60% Gelatine (Bsp. 6f), berechnet auf Trockensubstanz | | | | |
| PCL = Polycaprolacton (Poly-epsilon-Caprolacton) | | | | |
| EAA = Äthylen/Acrylsäure-Copolymer, Acrylsäuregehalt von 10 Mol% | | | | |
| PVOH = Polyvinylalkohol, Molekulargewicht (MG) (i) ca. 90'000, 87 Mol% Hydrolysegrad (HG) und (ii) MG ca. 108'000, HG 98-99 Mol% | | | | |
| EVOH = Äthylenvinylalkohol-Copolymer, Äthylengehalt: 28 Mol% | | | | |
| gesamte Mischung = 100% | | | | |
| Wasser: 4.5% (bezogen auf Lignin/Gelatine) | | | | |
| Rest: Schmiermittel und Fliessmittel (Lezithin 0.5%; und Na-Stearat, Polyäthylenglykol, Glycerin) | | | | |
| Polyesteramid = Polyesteramidcopolymer | | | | |

### Beispiel 7

Die folgenden Zusammensetzungen werden analog zu Beispiel 5 hergestellt und verarbeitet:

**Tabelle 2**

| Beispiel Nr. | deprot. Gelatine | Lignin/Sägemehl | PVOH | Polymer |
|---|---|---|---|---|
| 7a | 5.5% | 15.5%/70% | -.- | -.- |
| 7b | 4% | 18%/69% | -.- | -.- |
| 7c | 15% | 0%/72% | -.- | -.- |
| 7d | 20% | 0%/52% | 18% | -.- |
| 7e | 15% | 15%/58% | -.- | -.- |
| 7f | 5% | 12%/62% | 8% | EVOH, 3.5% |
| 7g | 8.5% | 25.5%/34% | 6% | PCL, 16% |
| 7h | 2.5% | 2.5%/68% | -.- | EAA, 3% |
| 7i | 20% | 30%/20.5% | 14% | EVOH, 5% |
| deprot. Gelatine = deprotonierte Gelatine | | | | |
| Lignin: als Trockensubstanz,Organosolv oder Kraft-Lignin | | | | |
| PCL = Polycaprolacton (Poly-epsilon-Caprolacton) | | | | |
| EAA = Äthylen/Acrylsäure-Copolymer, Acrylsäuregehalt von 10 Mol% | | | | |
| PVOH = Polyvinylalkohol, Molekulargewicht ca. 90'000, 87 Mol% Hydrolysegrad | | | | |
| EVOH = Äthylen/Vinylalkohol-Copolymer, Äthylengehalt: 28 Mol% gesamte Mischung = 100% | | | | |
| Wasser: 22.5% | | | | |
| Rest: Schmiermittel und Fliessmittel (Lezithin 0.5%; und Na-Stearat) | | | | |

### Beispiel 8

In analoger Weise zu den Beispielen 6 und 7 werden den in den Tabellen 1 und 2 aufgeführten Zusammensetzungen weitere Komponenten zugefügt. So beispielsweise synthetische thermoplastische Polymere und Copolymere, wie Polyäthylen, Polyvinylacetat, Polyester, Polyamide, Äthylen/Acrylsäure-Copolymere, Äthylen/Maleinanhydrid-Copolymere, Poly-beta-Hydroxybutyrat, Poly-gamma-Hydroxybuttersäure, Poly-gamma-Hydroxybuttersäure, Poly-gamma-Valerolacton, jeweils in Mengen von 5%, 10%, 15%, 20%, 30% oder 40% (jeweils Gewichtsprozente bezogen auf das Gewicht aller anwesenden Komponenten).

## Patentansprüche

1. Biologisch abbaubare Zusammensetzung, **dadurch gekennzeichnet, dass** diese durch Erhitzen und Verschmelzen von mindestens einem Lignin und/oder einem Lignin enthaltenden Material mit einem Protein erhalten wurde und diese Zusammensetzung mindestens ein synthetisches thermoplastisches Polymer enthält, welches ausgewählt ist aus der Gruppe der Polyolefine, Polyvinylacetate und partiell hydrolysierten Polyvinylacetate mit einem Hydrolysierungsgrad von 10 Mol% bis 50 Mol%; Polystyrole; Polyacrylsäureester; Polymethacrylsäureester; thermoplastischen Polykondensate, Alkylen/Acrylsäure-Copolymere und Alkylen/Methacrylsäure-Copolymere, Alkylen/Maleinanhydrid-Copolymere; Alkylen/Vinylalkohol-Copolymere, und diese Zusammensetzung gegebenenfalls einen oder mehrere Zusatzstoffe enthält, wobei diese Zusatzstoffe ausgewählt sind aus der Gruppe der Modifizierungsmittel, Alkenolpolymere, Füllstoffe, Gleitmittel, Plastifizierungsmittel, Stabilisatoren, Flammschutzmittel, Farbstoffe, Nukleierungsmittel, Verschäumungsmittel, Pigmente und deren Mischungen.

2. Zusammensetzung nach Anspruch 1, **dadurch gekennzeichnet, dass** das thermoplastische Polykondensat einen thermoplastischen Polyester, ein thermoplastisches Polyamid, Polyesteramid oder Poly(amid-anhydrid) darstellt.

3. Zusammensetzung nach Anspruch 2, **dadurch gekennzeichnet, dass** das thermoplastische Polykondensat einen bioabbaubaren Polyester, ein bioabbaubares Polyamid, Polyesteramid oder Poly(amid-anhydrid) darstellt.

4. Zusammensetzung nach Anspruch 3, **dadurch gekennzeichnet, dass** das der bioabbaubare Polyester aus einer alifatischen Hydroxycarbonsäuren mit 1 bis 24 Kohlenstoffatomen oder der entsprechenden Hydroxycarbonsäuren oder dem entsprechenden Lacton oder Lactid hergestellt wurde.

5. Zusammensetzung nach Anspruch 4, **dadurch gekennzeichnet, dass** das der bioabbaubare Polyester herstellt wurde aus Milchsäure oder dem entsprechenden Lactid; aus beta-Hydroxypropionsäure, beta-Propiolacton oder beta-Hydroxybuttersäure; aus gamma-Hydroxybuttersäure, gamma-Butyrolacton oder gamma-Valerolacton; aus 6-Hydroxycapronsäure oder epsilon-Caprolacton.

6. Zusammensetzung nach einem der Ansprüche 1 - 5, **dadurch gekennzeichnet, dass** das der bioabbaubare Polyester aus Milchsäure, gamma-Hydroxybuttersäure, gamma-Valerolacton oder epsilon-Caprolacton hergestellt wurde.

7. Zusammensetzung nach einem der Ansprüche 1 - 6, **dadurch gekennzeichnet, dass** der bioabbaubare Polyester Poly-epsilon-caprolacton darstellt.

8. Zusammensetzung nach einem der Ansprüche 1 - 7, **dadurch gekennzeichnet, dass** diese ein Äthylen/Vinylalkohol-Copolymer mit einem Vinylalkoholanteil von mindestens 50 Mol% enthält.

9. Zusammensetzung nach einem der Ansprüche 1 - 8, **dadurch gekennzeichnet, dass** das Gewichtsverhältnis des trockenen Lignins und/oder des trockenen Lignin enthaltenden Materials einerseits zum trockenen Protein anderseits in der Zusammensetzung 99.95:0.05 bis 20:80, beträgt.

10. Zusammensetzung nach einem der Ansprüche 1 - 9, **dadurch gekennzeichnet, dass** die Zusammensetzung als pulverige Mischung, als sprühgetrocknetes Pulver, als Schmelze oder als ein daraus hergestellter Gegenstand, vorliegt.

11. Zusammensetzung nach einem der Ansprüche 1 bis 10, **dadurch gekennzeichnet, dass** das Lignin aus Holz oder aus Stroh gewonnen wurde und in Form von Sulfat-Lignin, Sulfonat-Lignin, Organosolv-Lignin, mit Dampfdruck behandeltes Lignin und mit Säure hydrolysiertes Lignin vorliegt.

12. Zusammensetzung nach einem der Ansprüche 1 bis 11, **dadurch gekennzeichnet, dass** das Lignin ein chemisch verändertes Lignin darstellt.

13. Zusammensetzung nach einem der Ansprüche 1 bis 12, **dadurch gekennzeichnet, dass** das Protein eine pflanzliche oder tierische Gelatine oder Kasein oder ein chemisch modifiziertes Protein darstellt.

14. Zusammensetzung nach einem der Ansprüche 1 bis 13, **dadurch gekennzeichnet, dass** das Protein Gelatine oder ein mit Acrylsäure oder Methacrylsäure oder mit Glycidylmethacrylat modifiziertes Protein darstellt.

15. Zusammensetzung nach einem der Ansprüche 1 bis 14, **dadurch gekennzeichnet, dass** das Protein ein deprotoniertes Protein darstellt, welches bei mindestens p_{H} 8 deprotoniert wurde.

16. Zusammensetzung nach einem der Ansprüche 1 bis 15, **dadurch gekennzeichnet, dass** diese Stärke und/oder chemisch modifizierte Stärke enthält.

17. Zusammensetzung nach einem der Ansprüche 1 bis 16, **dadurch gekennzeichnet, dass** diese mittels Pressformen, Spritzgiessen, Blasformen, Extrudieren und Coextrudieren (Stab-, Rohr- und Filmextrudieren) oder Vacuumformen zu geformten Gegenständen verarbeitet wurde.

18. Zusammensetzung nach einem der Ansprüche 1 bis 17, **dadurch gekennzeichnet, dass** diese als Reklameartikel, Etiketten, Becher, Blumentöpfe, Fadenspulen, Kerzenbecher, Halterungen, Geschirr, Bestecke, Flaschen, Verpackungsmaterialien, Folien, laminierte Folien, Säcke, Beutel, Schäume, Rohre, Stäbe, Granulate oder Pulver vorliegt.

19. Ausgangsmischung, welche durch Erhitzen und Schmelzen eine Zusammensetzung gemäss einem der Patentansprüche 1 bis 16 ergibt, **dadurch gekennzeichnet, dass** diese Ausgangsmischung die folgenden Bestandteile enthält: (i) ein Lignin und/oder ein Lignin enthaltendes Material; (ii) ein Protein, welches gegebenenfalls deprotoniert ist sowie mindestens ein synthetisches thermoplastisches Polymer welches vorzugsweise bioabbaubar ist; und (iii) gegebenenfalls einen oder mehrere Zusatzstoffe ausgewählt aus der Gruppe umfassend Modifizierungsmittel, Alkenolpolymere, Füllstoffe, Gleitmittel, Plastifizierungsmittel, Stabilisatoren, Flammschutzmittel, Farbstoffe, Nukleierungsmittel, Verschäumungsmittel, Pigmente und deren Mischungen, wobei das Gewichtsverhältnis des trockenen Lignins und/oder des trockenen Lignin enthaltenden Materials einerseits zum trockenen Protein anderseits in der Zusammensetzung 99.95:0.05 bis 20:80 beträgt.

## Claims

1. A biodegradable composition, **characterized in that** said composition has been obtained by heating and melting together at least one lignin and/or a lignin containing material with a protein, and that said composition contains at least one synthetic thermoplastic polymer which is selected from the group consisting of polyolefines, polyvinyl acetates and partially hydrolysed polyvinyl acetates with a degree of hydrolysis of 10 mol% to 50 mol%; polystyrenes; polyacrylic acid esters; polymethacrylic acid esters; thermoplastic polycondensates, alkylene/acrylic acid copolymers and alkylene/methacrylic acid copolymers, alkylene/maleic anhydride copolymers; alkylene/vinylalcohol copolymers and that said composition optionally contains one or more additives, whereby said additives are selected from the group of modifying agents, alkenol polymers, fillers, lubricants, plasticizers, stabilizers, flame retardants, dyestuffs, nucleating agents, foaming agents, pigments and mixtures thereof.

2. A composition according to claim 1, **characterized in that** the thermoplastic polycondensate is a thermoplastic polyester, a thermoplastic polyamide, polyester amide or poly(amide anhydride).

3. A composition according to claim 2, **characterized in that** the thermoplastic polycondensate is a biodegradable polyester, a biodegradable polyamide, polyester amide or poly(amide anhydride).

4. A composition according to claim 3, **characterized in that** the biodegradable polyester was made from an aliphatic hydroxy-carbonic acid with 1 to 24 carbon atoms or from the corresponding hydroxy-carbonic acid or the corresponding lactone or lactide.

5. A composition according to claim 4, **characterized in that** the biodegradable polyester was made from lactic acid or the corresponding lactide; from beta-hydroxy-propionic acid, beta-propiolactone or beta-hydroxy-butyric acid; from gamma-hydroxy-butyric acid, gamma-butyrolactone or gamma-valerolactone; from 6-hydroxy-capronic acid or epsilon-caprolactone.

6. A composition according to any one of the claims 1-5, **characterized in that** the biodegradable polyester was made from lactic acid, gamma-hydroxy-butyric acid, gamma-valerolactone or epsilon-caprolactone.

7. A composition according to any one of the claims 1-6, **characterized in that** the biodegradable polyester is poly-epsilon-caprolactone.

8. A composition according to any one of the claims 1-7, **characterized in that** said composition contains an ethylene/vinyl alcohol copolymer with a vinyl alcohol content of at least 50 mol%.

9. A composition according to any one of the claims 1-8, **characterized in that** the weight ratio of the dry lignin and/or the dry lignin containing material on the one side to the dry protein on the other side in said composition is from 99.95 : 0.05 to 20 : 80.

10. A composition according to any one of the claims 1-9, **characterized in that** said composition is present in the form of a powdery mixture, a spray dried powder, a melt or a shaped article made thereof.

11. A composition according to any one of the claims 1-10, **characterized in that** the lignin is made from wood or from straw and is present in the form of sulfate-lignin, sulfonate-lignin, organosolv-lignin, lignin which has been treated with vapor pressure and acid-hydrolyzed lignin.

12. A composition according to any one of the claims 1-11, **characterized in that** the lignin is a chemically modified lignin.

13. A composition according to any one of the claims 1-12, **characterized in that** the protein is a vegetable or a animal gelatin or casein or a chemically modified protein.

14. A composition according to any one of the claims 1-13, **characterized in that** the protein is gelatin or a protein which has been modified with acrylic acid or methacrylic acid or with glycidyl methacrylate.

15. A composition according to any one of the claims 1-14, **characterized in that** the protein is a deprotonated protein, which been deprotonated at a p_{H} of least 8.

16. A composition according to any one of the claims 1 to 15, **characterized in that** said composition contains starch and/or a chemically modified starch.

17. A composition according to any one of the claims 1 to 16, **characterized in that** said composition has been formed to shaped articles using a method selected from compression molding, injection molding, blow molding, extrusion and co-extrusion (rod-, tube- and film-extrusion) or vacuum molding.

18. A composition according to any one of the claims 1 to 17, **characterized in that** said composition is present in the form of an advertising article, a label, cup, flower pot, spool, candle-cup, holding device, table-ware, cutlery, bottles, packaging materials, films, laminated films, sacks, bags, foams, tubes, rods, granulates or powder.

19. A starting composition which on heating and melting yields a composition according to any one of the claims 1 to 16, **characterized in that** said starting composition contains the following components: (i) a lignin and/or a lignin containing material; (ii) a protein which optionally is deprotonated and at least one synthetic thermoplastic polymer which preferably is biodegradable and (iii) optionally one or more additives which are selected from the group comprising modifying agents, alkenol polymers, fillers, lubricants, plasticizers, stabilizers, flame retardants, dyestuffs, nucleating agents, foaming agents, pigments and mixtures thereof, wherein the weight ratio of the dry lignin and/or the dry lignin containing material on the one side to the dry protein on the other side in said composition is from 99.95 : 0.05 to 20 : 80.

## Revendications

1. Une composition biodégradable, **caractérisée en ce que** la dite composition est obtenue par le chauffage et la fusion d'au moins une lignine et/ ou une matière comprenant de la lignine avec une protéine et **en ce que** ladite composition contient au moins un polymère thermoplastique synthétique choisi dans le groupe comprenant des polyoléfines, poly(vinylacétates) et poly(vinylacétates) partiellement hydrolysés avec un degré d'hydrolysation de 10 à 50 mole%; polystyrène; poly(esters d'acide acrylique); poly(esters d'acide méthacrylique); polycondensats thermoplastiques; alcoylène/ acide acrylique copolymères et alcoylène/ acide méthacrylique copolymères; alcoylène/ anhydride maléique copolymères; alcoylène/ alcool vinylique copolymères et **en ce que** ladite composition contient optionnellement un ou plusieurs additifs, où lesdits additifs sont choisis dans le groupe comprenant des modificateurs, des polymères d'alcénole, des charges, des lubrifiants, des plastifiants, des stabilisateurs, des retardateurs d'inflammation, des colorants, des agents de nucléation, des agents de moussage, des pigments et leurs mélanges.

2. Une composition selon la revendication 1, **caractérisée en ce que** ledit polycondensat thermoplastique est un polyester thermoplastique, un polyamide thermoplastique, un polyesteramide ou poly(amide-anhydride).

3. Une composition selon la revendication 2, **caractérisée en ce que** ledit polycondensat thermoplastique est un polyester biodégradable, un polyamide biodégradable, un polyesteramide ou poly(amide-anhydride).

4. Une composition selon la revendication 3, **caractérisée en ce que** ledit polyester biodégradable a été fabriqué à partir d'un acide hydroxycarbonique aliphatique avec 1 à 24 atomes de carbone ou l'acide hydroxycarbonique correspondant ou du lactone ou lactide correspondant.

5. Une composition selon la revendication 4, **caractérisée en ce que** ledit polyester biodégradable a été fabriqué à partir d'acide lactique ou du lactide correspondant; d'acide beta-hydroxypropionique, beta-propiolactone ou de l'acide beta-hydroxy-butyrique; de l'acide gamma-hydroxy-butyrique, gamma-butyrolactone ou gamma-valérolactone; de l'acide 6-hydroxy-capronique ou epsilon-caprolactone.

6. Une composition selon l'une quelconque des revendications 1 à 5, **caractérisée en ce que** ledit polyester biodégradable a été fabriqué à partir d'acide lactique, acide gamma-hydroxy-butyrique, gamma-valérolactone ou epsilon-caprolactone.

7. Une composition selon l'une quelconque des revendications 1 à 6, **caractérisée en ce que** ledit polyester biodégradable est un poly-epsilon-caprolactone.

8. Une composition selon l'une quelconque des revendications 1 à 7, **caractérisée en ce que** la dite composition contient un éthylène/ alcool vinylique copolymère avec une teneur d'alcool vinylique d'au moins 50 mole%.

9. Une composition selon l'une quelconque des revendications 1 à 8, **caractérisée en ce que** la proportion en poids de la lignine sèche et/ ou la matière contenant la lignine sèche d'une part par rapport à la protéine sèche d'autre part dans la dite composition est comprise entre 99.95 : 0.05 et 20 : 80.

10. Une composition selon l'une quelconque des revendications 1 à 9, **caractérisée en ce que** la dite composition se présente sous forme de mélange poudreux, de poudre séchée par atomisation, de masse fondue ou d'un article qui en est fabriqué.

11. Une composition selon l'une quelconque des revendications 1 à 10, **caractérisée en ce que** la lignine est obtenue à partir de bois ou de paille et est présente sous forme de sulfate-lignine, sulfonate-lignine, organosolv-lignine, lignine qui a été traitée sous pression de vapeur et de la lignine hydrolysée avec de l'acide.

12. Une composition selon l'une quelconque des revendications 1 à 11, **caractérisée en ce que** la lignine est de la lignine chimiquement modifiée.

13. Une composition selon l'une quelconque des revendications 1 à 12, **caractérisée en ce que** la protéine est une gélatine d'origine végétale ou animale ou de la caséine ou une protéine chimiquement modifiée.

14. Une composition selon l'une quelconque des revendications 1 à 13, **caractérisée en ce que** la protéine est de la gélatine ou une protéine qui a été modifiée avec de l'acide acrylique ou métacrylique ou avec du glycidyle méthacrylate.

15. Une composition selon l'une quelconque des revendications 1 à 14, **caractérisée en ce que** la protéine est une protéine déprotonisée, qui était déprotonisée à une valeur pH d'au moins 8.

16. Une composition selon l'une quelconque des revendications 1 à 15, **caractérisée en ce que** la dite composition contient de l'amidon et/ ou un amidon chimiquement modifié.

17. Une composition selon l'une quelconque des revendications 1 à 16, **caractérisée en ce que** la dite composition a été travaillée en des articles façonnés en utilisant le moulage par compression, le moulage par injection, le moulage par soufflage, l'extrusion et coextrusion (extrusion de baguette, tige et film) ou le moulage sous vide.

18. Une composition selon l'une quelconque des revendications 1 à 17, **caractérisée en ce que** la dite composition se présente sous forme d'articles de publicité, d'étiquettes, de godets, de pots de fleurs, de bobines, de godets de bougies, de fixations, de vaisselles, de couverts, de bouteilles, de matières d'emballage, de films, de films laminés, de sacs, de sachets, de mousses, de tubes, de tiges, de granulés ou de poudres.

19. Un mélange initial, duquel on obtient par le chauffage et la fusion une composition selon l'une quelconque des revendications 1 à 16, **caractérisée en ce que** ledit mélange initial contient les composants suivants: (i) une lignine et/ ou une matière contenant de la lignine; (ii) une protéine optionnellement déprotonisée ainsi qu'au moins un polymère thermoplastique synthétique qui est de préférence biodégradable; et (iii) optionnellement un ou plusieurs additifs choisi dans le groupe comprenant des modificateurs, des polymères d'alcénole, des charges, des lubrifiants, des plastifiants, des stabilisateurs, des retardateurs d'inflammation, des colorants, des agents de nucléation, des agents de moussage, des pigments et leurs mélanges, où la proportion en poids de la lignine sèche et/ ou la matière contenant la lignine sèche d'une part par rapport à la protéine sèche d'autre part dans la composition est comprise entre 99.95 : 0.05 et 20 : 80.
